# EUROPEAN PATENT APPLICATION

(11) **EP 2 232 972 A1**
(43) Date of publication of application: **29.09.2010**
(21) Application number: 10156932.5
(22) Date of filing: 18.03.2010
(51) Int. Cl.: A01B 33/08

(54) **Rotary harrow**

(30) Priority: 26.03.2009 IT PD20090018 U
(71) Applicant: Maschio Gaspardo S.p.A., 35011 Campodarsego (PD) (IT)
(72) Inventor: Maschio, Egidio, 35011, Campodarsego (PD) (IT)
(74) Representative: Cantaluppi, Stefano

(57) **Abstract**

A rotary harrow (1) comprises a load-bearing structure (2, 2a, 2b) and a plurality of tool-holding rotors (3) which are kinematically connected in cascade by means of respective gears (5) and are supported on the structure (2, 2a, 2b) by means of respective bearings (9a, 9b), wherein least one (9a, 9b) of the bearings supporting each tool-holding rotor (3) is of the orientable roller type.

## Description

The present invention relates to an improved rotary harrow of the type comprising a load-bearing structure, generally a box beam, which supports a plurality of tool-holding rotors kinematically connected in cascade.

This typical structure is used widely in the manufacture of rotary harrows and has the clear advantage that the box beam contains the oil that is required to lubricate both the bearings supporting the tool-holders and the gears that are provided for connecting them kinematically in cascade.

As is known, the power of tractors that are available in the agricultural field is continually increasing. This continual increase leads to the capability, and hence the need, to use ever larger machine tools (such as, in this case, harrows) which are capable of a greater working width and/or a greater speed.

All of this translates into a greater power delivered by the tractor and utilized by the machine tool.

As a result, there is a need for increased dimensions of the transmission members.

While in business there is a tendency to use existing designs relating to machines that are already in production and can satisfy the desired working width, the use of the same machine with tractors having greater power than the original design conditions may translate into increased wear of the transmission members which, particularly, with reference to the bearings, translates into a substantial reduction in their life.

The straightforward solution to this problem is to redesign the machine tool with larger dimensions of the transmission members, including the bearings which support the tool-holder.

However, some re-arrangement of the original design is required, which translates into re-planning of the machine and of the tools necessary for its assembly with the inevitable result of an undesired manufacturing burden.

In other cases, manufacturers have adopted taper roller bearings instead of ball bearings.

However, taper roller bearings have the serious disadvantage of requiring individual adjustment at the assembly stage which makes the manufacture of the machine tool burdensome and leads to more complex construction and maintenance.

It is worth pointing out that even the simple replacement of a sealing ring of the blade-holding rotor of a harrow of this type involves complete dismantling of the transmission unit with an operation time that is as much as ten times greater than that required for machines with rotors supported by ball bearings.

The problem underlying the present invention is that of providing a harrow which is structurally and functionally suitable for overcoming the disadvantages discussed with reference to the prior art mentioned.

An objective of the invention is to provide a harrow which does not require a complete redesign of the tool-holder support beam since it can contain tool-holders suitable for withstanding the greater load resulting from an increase in permissible power, simply by replacement of the bearings.

This problem is solved and this objective is achieved by means of a rotary harrow formed in accordance with the appended claims.

The characteristics and the advantages of the invention will become clearer from the following detailed description of a preferred but not exclusive embodiment thereof which is described by way of non-limiting example with reference to the appended drawings, in which:

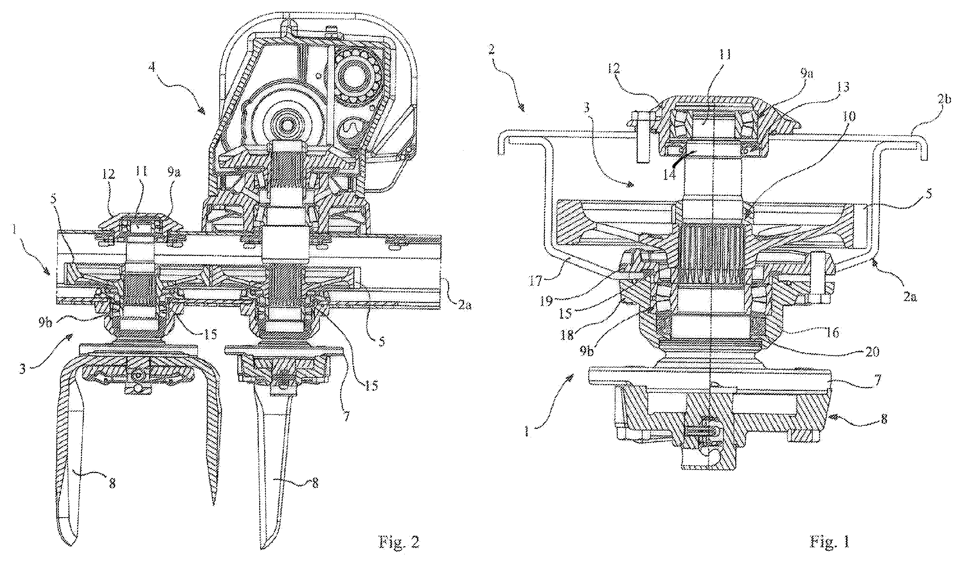

Figure 1 is a cross-section through a harrow according to the invention; and
Figure 2 is a longitudinal section through the harrow of Figure 1.

In the drawings, a rotary harrow, generally indicated 1, includes a box-beam load-bearing structure 2 produced by the leaktight combination of a tank-like profiled section 2a and a cover 2b; the tank-like profiled section 2a supports and partially contains a plurality of tool-holding rotors 3. The rotors 3 are kinematically connected in cascade with one another, starting from a central transmission 4, by means of gears 5.

Each rotor 3 comprises a shaft 10, to one axial end of which an attachment 7 for one or more blades 8 is firmly fixed and which is supported on the beam 2 by means of bearings 9a, 9b.

Starting from the end remote from the attachment 7, the shaft 10 is formed with a first cylindrical portion 11 on which the bearing 9a is keyed; the bearing 9a in turn is mounted in a respective hole in the cover 2b by means of a support 12.

The support 12 also carries a sealing ring 13 a lip of which acts on a second cylindrical portion 14.

The gear 5 is keyed in an intermediate portion of the shaft 10 by means of a coupling 15 that is capable of transmitting torque.

The second bearing 9b is mounted in a respective support 16 which is fitted in a leaktight manner in the wall 17 of the tank 2a remote from the cover 2b, in a respective hole. The connection between the support 16 and the wall 17 involves the clamping of the wall 17 between a flange 18 and a complementary flange 19 of the support 16. The support 16 is in turn completed by a second sealing ring 20.

At least the bearing 9b but, preferably, both of the bearings 9a, 9b are of the orientable roller type.

The assembly is therefore of the bearing-gear-bearing type, in contrast with the gear-bearing-bearing type which is typically employed when taper roller bearings are used.

With the use of bearings of this type, it has been found that the load capacity, and hence the life of the bearings, can be increased.

Moreover, these bearings can be substituted for existing ball bearings without the need to re-arrange the basic existing design of the machine tool.

These bearings are easy to fit and do not require the delicate adjustments that are required, in contrast, by taper bearings. This leads to considerable simplicity of assembly and also of repair.

These bearings tolerate the inevitable disalignment which results from being mounted on the "carpentry" of the lower and upper supports of the machine tool and which, in contrast, is poorly tolerated by ball bearings and is not tolerated at all by conical bearings.

The angular adaptability of orientable roller bearings enables the system to withstand any temporary or permanent deformations which the machine undergoes during use.

In conventional systems such deformations lead to premature mechanical collapse both at the level of the bearings and at the level of the shafts and gears.

## Claims

1. A rotary harrow (1) comprising a load-bearing structure (2, 2a, 2b) and a plurality of tool-holding rotors (3) which are kinematically connected in cascade by means of respective gears (5) and are supported on the structure (2, 2a, 2b) by means of respective bearings (9a, 9b), **characterized in that** at least one (9a, 9b) of the bearings supporting each tool-holding rotor (3) is of the orientable roller type.

2. A rotary harrow according to Claim 1 in which the at least one bearing (9b) is keyed on a shaft (10) of the rotor (3) which is mounted on the structure (2).

3. A rotary harrow according to Claims 1 or Claim 2 in which each rotor (3) comprises a second bearing (9a) arranged in a manner such that the gear (5) of each rotor (3) is interposed between the at least one bearing (9b) and the second bearing (9a).

4. A rotary harrow according to any one of the preceding claims in which the load-bearing structure (2) is formed as a box beam, the bearings (9a, 9b) being supported on opposed walls (2a, 2b) of the beam (2).
